# EUROPÄISCHE PATENTSCHRIFT

(11) **EP 1 665 840 B1**
(45) Veröffentlichungstag und Bekanntmachung des Hinweises auf die Patenterteilung: **14.05.2008**
(21) Anmeldenummer: 04762714.6
(22) Anmeldetag: 25.08.2004
(51) Int. Cl.: H04Q 7/22

(54) **VERFAHREN UND VORRICHTUNG ZUR DECKUNG VON MOBILEN INFORMATIONSBEDÜRFNISSEN MITTELS UNIDIREKTIONALER ÜBERTRAGUNG VON STRUKTURIERTEN INFORMATIONEN**
METHOD AND DEVICE FOR MEETING MOBILE INFORMATION REQUIREMENTS BY MEANS OF UNIDIRECTIONAL TRANSMISSION OF STRUCTURED INFORMATION
PROCEDE ET DISPOSITIF POUR COUVRIR DES BESOINS D'INFORMATIONS MOBILES AU MOYEN D'UNE TRANSMISSION UNIDIRECTIONNELLE D'INFORMATIONS STRUCTUREES

(30) Priorität: 27.08.2003 DE 10339481
(43) Veröffentlichungstag der Anmeldung: 07.06.2006
(73) Patentinhaber: Röder, Tilman, 97980 Bad Mergentheim (DE)
(72) Erfinder: Röder, Tilman, 97980 Bad Mergentheim (DE)
(86) Internationale Anmeldenummer: PCT/DE2004/001881
(87) Internationale Veröffentlichungsnummer: WO 2005/022803

(56) Entgegenhaltungen:
- WO-A-02/11329
- WO-A-99/27717
- WO-A-03/009491
- DE-A1- 10 210 783

## Beschreibung

**Die Erfindung betrifft ein Verfahren** zur Datenübertragung, insbesondere zur Übertragung von strukturierten Daten mittels Funk, Schall oder Licht von einem stationären oder mobilen Content-Sender evtl. auch als Sende-Empfangseinheit auf mindestens ein Funk-Endgerät als Empfangs-, evtl. auch als Sende-Empfangseinheit.
Dort betrifft die Erfindung ein Verfahren zur gezielten Fokussierung auf lokal (vom jeweiligen Aufenthaltsort des Content-Senders abhängig) relevante Daten.

### Stand der Technik

Mit der Weiterentwicklung der Übertragungstechnik und der persönlichen mobilen Kommunikationssysteme nimmt der mobile Informationsbedarf und somit der Bedarf an persönlichen drahtlosen Übertragungen rapide zu.

Der mobile Informationsbedarf zeichnet sich im wesentlichen (den Aspekt der Unterhaltung mal außer Acht gelassen) dadurch aus, daß spezielle -in der Regel vom jeweiligen Aufenthaltsort abhängige- Anforderungen bestehen.
Um diesen Anforderungen Rechnung zu tragen und um ein Überangebot von Informationen (beispielhaft sei hier das Internet -World-Wide-Web- genannt) zu vermeiden, welches den Zugriff auf die relevanten Informationen beeinträchtigt, wird eine gezielte Fokussierung auf lokal relevante Daten nötig.

Es sind zahlreiche Verfahren zur Datenübertragung bekannt, die darauf ausgerichtet sind, den Bedarf nach mobil zugänglichen elektronischen Informationen zu befriedigen. Die meisten dieser Lösungen basieren auf bi-direktionale Kommunikation (mittels Schall-, Radio- oder Lichtwellen) von mindestens zwei integrierten Sende- und Empfangsmodulen.
Keine dieser im weiteren noch näher aufgeführten Ansätze kann jedoch in ausreichendem Maße die besonderen Anforderungen nach einer lokalen Vorselektion der Daten und somit Beschränkung auf die relevanten Informationen bei gleichzeitig großer Reichweite, langer Unabhängigkeit von stationärer Stromversorgung und angemessenen Kosten erfüllen.

Die Lösungen sind im wesentlichen kategorisierbar in Mobiltelefonie und eigenständige Infrastruktur mit vorwiegend stationären oder auch mobilen Content-Sendern.

### Mobiltelefonie-Infrastruktur:

Wireless Application Protocol (WAP)/I-mode in Verbindung mit GPRS kann aufgrund der Zellengröße nur sehr unzureichend die Vorselektion der Daten gewährleisten. Für den Zugriff auf die Informationen werden hohe Nutzungsentgelte gefordert. Es handelt sich um eine bereits länger existierende Lösung ohne breite Kundenakzeptanz.
Beim UMTS, z.B. in Verbindung mit dem Wireless Application Protocol (WAP), ist eine Vorselektion der Daten teilweise, jedoch auch nur unzureichend möglich. UMTS wird sukzessive eingeführt. Mobile Endgeräte sind sehr hochpreisig, das Gebührensystem ebenfalls. UMTS wird erst mittelfristig flächendeckend verfügbar sein. Die Anwendung wird voraussichtlich auch in Zukunft nur eine kleine Nische des kompletten Mobiltelefoniemarkts abdecken.

Aufgrund der sub-optimalen situationsbedingten (lokalen) Vorselektion der Daten muss der Nutzer die relevanten Daten aufwändig (Kosten und Zeit) suchen. Der Erhalt des gewünschten Ergebnisses ist ungewiss; die Handhabung ist umständlich. Insbesondere für den Einsatz in mobilen Verkehrsmitteln mit ihren sehr spezifischen Anforderungen (beispielhaft seinen Zugstandsanzeiger, Ausweisung der Position des Nutzers mit Endgerät im Zug während der Fahrt, genannt) sind Mobiltelefonieansätze aufgrund der Ausprägung ihrer Infrastruktur (stationäre Basisstationen) ungeeignet.

### Eigenständige Infrastruktur:

Die begrenzte Kapazität gegenwärtiger Akkumulatorentechnik limitieren die Sende-Leistungsfähigkeit mobiler Endgeräte und somit die Reichweite.
Dies kennzeichnet Lösungen wie Bluetooth-, Infrarot- und sonstige Access Points, sowie Wireless LAN.

Eine ausreichende lokale Abdeckung ist somit nur durch sehr hohe Investitionen in die Content-Senderinfrastruktur (engmaschiges Netz von Content-Sendern) möglich. Abhängig von den architektonischen Rahmenbedingungen (z.B. Höhe von Decken in Räumen als Verankerung der Sender) und im freien Raum ist eine befriedigende Abdeckung teilweise gar nicht realisierbar. Bei Infrarotbasierenden Lösungen kommt als zusätzlich einschränkende Voraussetzung noch der benötigte direkte visuelle Kontakt zwischen Sender und Empfänger hinzu.
Die Lösungen sind somit im wesentlichen auf den Einsatz in eng abgegrenzten Zonen mit einem kleinen Abdeckungsradius, so genannten "Hot Spots" beschränkt.

Darüber hinaus sind, wie zum Beispiel in der Veröffentlichung WO 02/11329 dargestellt, Verfahren bekannt, bei denen ein Sender wiederkehrend Rundfunknachrichten uni-direktional in Seitenstruktur an Funk-Endgeräte sendet. Es handelt sich bei diesen Verfahren jedoch um inflexible Lösungen, die keine Unterscheidung von Rundspruchnachrichten unterschiedlicher Quellen und Auswahl der relevanten Quelle vorsehen. Dies kann zu einer hohe Störanfälligkeit und eingeschränkter Anwendbarkeit führen.
Eine Anpassung der Sendereichweite um den unterschiedlichen Informationsanforderungen von räumlich nah bei einander liegenden Aufenthaltsorten (z.B. 2 nebeneinander liegender Bahnsteige) differenziert Rechnung zu tragen ist in diesen Verfahren nicht vorgesehen.
Das Funk-Endgerät sendet in diesen Verfahren interaktiv Abfragen an den Sender einer Rundspruchnachricht, jedoch wird dabei die Abfrage grundsätzlich über eine bi-direktionale Kommunikationsverbindung oder grundsätzlich per SMS durchgeführt. Eine intelligente Anpassung des Übertragungsweges an die Verfügbarkeit von Hot-Spots als Basis für den Aufbau der bi-direktionalen Kommunikationsverbindung (d.h. eines Verkehrskanals) und bei Nichtverfügbarkeit Versand über SMS ist nicht vorgesehen.
Darüber hinaus sind Verfahren bekannt, bei denen eine Vielzahl von Content-Sendern identifiziert und der gewünschte daraus ausgewählt werden kann.

### Aufgabe

Es ist die Aufgabe der Erfindung, ein kostengünstiges Verfahren (Investition und Betrieb für Nutzer und Content-Anbieter) für die Informationsversorgung (mittels Datenübertragung durch Schall-, Radio- oder Lichtwellen) für Funk-Endgeräte zu schaffen. Das Verfahren soll sich zum einen durch eine größere Reichweite und
Unabhängigkeit vom Stromnetz als bei aktuellen Lösungen mit eigenständiger Infrastruktur auszeichnen. Zum anderen soll die Konzentration auf relevante Daten über eine lokale Vorselektion der Informationen sowie individuelle Anpassbarkeit der Sendereichweite gewährleistet werden.
Das Verfahren soll eine hohe Datensicherheit gewährleisten und einer Vielzahl an möglichen Nutzern einen bedienungsfreundlichen und schnellen zuverlässigen Zugriff auf die Informationen erlauben.
Die Aufgabe der Erfindung ist es auch, Datenübertragungssysteme, Sender und Empfänger zur Umsetzung des neuartigen Datenübertragungsverfahrens bereitzustellen.

Diese Aufgaben werden mit einem Verfahren, einem Datenübertragungssystem, einem Sender und einem Empfänger mit den Merkmalen gemäß der unabhängigen Patentansprüche gelöst.
Vorteilhafte Ausführungsformen und Anwendungen der Erfindung ergeben sich aus den abhängigen Ansprüchen.

### Offenbarung

Die Erfindung umfasst zum einen ein Verfahren zur Datenübertragung von Inhalten zwischen mindestens einem Funk-Endgerät und mindestens einem Content-Sender, wobei das Verfahren folgende Schritte enthält:
Wiederkehrende Sendung eines Teils oder des gesamten Inhalts in Form einer Seitenstruktur;
Identifikation vorhandener Content-Sender und daraus Auswahl eines gewünschten Senders über das Funk-Endgerät;
Empfang des Inhalts durch das Funk-Endgerät;
Auswahl und Darstellung des Inhalts in Form von Seiten durch das Funk-Endgerät; Durchführung von Abfragen deren Ergebnisse in dieser Form nicht durch den Inhalt abgedeckt sind mittels vorgegebener Masken, bi-direktionaler Datenübertragung oder SMS an den Content-Anbieter und Darstellung des Ergebnisses auf gesonderten Seiten, Nutzung einer bi-direktionalen Datenübertragung oder SMS für die Übermittlung von Ergebnissen aus der Abfrage.
Zum anderen beinhaltet die Erfindung ein Datenübertragungssystem, das zur Durchführung aller Schritte des Datenübertragungsverfahrens eingerichtet ist, und mindestens ein Funk-Endgerät sowie mindestens einen Content-Sender umfasst. Das Funk-Endgerät beinhaltet eine Empfangseinheit bzw. Sende-Empfangseinheit und ist für die Durchführung aller Schritte des Datenübertragungsverfahrens eingerichtet.
Der Content-Sender beinhaltet eine Sendeeinheit bzw. Sende-Empfangseinheit und ist für die Durchführung aller Schritte des Datenübertragungsverfahrens ausgelegt. Vorzugsweise wird das erfindungsgemäße Verfahren für Mobiltelefone, PDAs oder tragbare Rechner als Funk-Endgerät als Empfangs-, evtl. auch Sender-Empfangseinheit eingesetzt. Denkbar ist auch, das Verfahren auf einem eigenständigen Gerät anzuwenden.
Das Funk-Endgerät dient hierbei in der bevorzugten Ausfertigung im wesentlichen als Empfänger. Dies kann über eine Integration als Lösung im mobilen Gerät, wie auch über eine externe Erweiterung erfolgen.
Der Content-Sender kann mobil oder stationär sein. Er erfüllt im wesentlichen die Funktion des Senders, kann aber, im Falle von bi-direktionaler Kommunikation, auch als Sende-Empfangseinheit fungieren.

Die Übertragung der Daten erfolgt vorzugsweise mittels Funk vom Content-Sender auf das oder die Funk-Endgeräte.
Da die Sendeleistung und somit auch die Sendereichweite eines Funk-Gerätes begrenzt ist, erfolgt die Datenübertragung vorzugsweise uni-direktional. Die Reichweite wird somit von der Leistung des Senders, die systembedingt weitaus höher als die des Funk-Endgeräts sein kann, bestimmt.

Die übertragenen Daten können als Text, Grafik, bewegte wie unbewegte Bilder, Sprache und Musik ausgegeben werden.
Die Daten werden in der bevorzugten Ausführungsform als Text und Grafiken in einer definierten Seitenstruktur mit einer vorzugsweise standardisierten (numerischen, alphabetischen oder alphanumerischen) Gliederung gehalten. Logische Verknüpfungen zwischen den Seiten werden abgebildet (z.B.: Druck auf eine definierte (Funktions-)taste oder eine Kombination von Tasten des Funk-Endgerät führt zu einer Darstellung der für die jeweilige Seite spezifisch vorgegebene verknüpfte Seite).
Informationsabfragen erfolgen standardisiert, vorzugsweise mittels alphabetischem oder numerischem Inhaltsverzeichnis. Alternativ kann dies auch nicht standardisiert erfolgen, zum Beispiel über Verknüpfungen oder Auswahllisten, die auf die weiterführenden Seiten verweisen.
Der Content-Sender sendet vorzugsweise den kompletten Inhalt wiederkehrend in kurzen Zyklen, unter Berücksichtigung eventuell inzwischen erfolgter Aktualisierungen des Inhalts.
Nachzugsweise sind längere Abstände und bzw. oder Sendung in unregelmäßiger Folge bzw. einmalig möglich (z.B. für Offline-Nutzung).
Das Funk-Endgerät zeigt nur die Inhalte der jeweils ausgewählten Seite(n) an. Idealerweise besitzt das Funk-Endgerät einen Datenspeicher, so daß vorzugsweise Hauptseiten und die auf die aktuelle Seite folgenden und vorangegangenen Seiten, sowie Seiten, zu denen eine direkte Verknüpfung besteht temporär gespeichert werden können. Dies führt zu einem schnelleren Aufbau dieser bevorzugt aufgerufenen Seiten des Inhalts.
Bei Speicherung von Teilen oder des gesamten Inhalts ist unter Nutzung des erfindungsgemäßen Verfahrens, insbesondere der Datenstruktur und der Informationsabfrage auch eine Offline-Nutzung, (außerhalb der Reichweite des Senders) möglich.

In der bevorzugten Ausführung wird der Inhalt der Seiten weitestgehend vorab durch den Anbieter definiert. Abfragen werden vorzugsweise nicht fallweise auf Anstoß durch den Nutzer über das Funk-Endgerät erzeugt, sondern durch den Content-Anbieter vorab oder automatisch (z. B. Zeit oder Vorfallabhängig) generiert. Die Ergebnisse werden auf definierte Seiten gestellt.
Die Daten werden jedem Nutzer gleichermaßen zur Verfügung gestellt.
Individuelle bzw. komplexe Abfragen, die eine bi-direktionale Kommunikation erfordern, werden in der bevorzugten Ausführungsform mit einer gesonderten Systematik (z.B. Anfragen mit Maskenvorgabe aus dem Verfahren über SMS oder mittels bi-direktionaler Datenübertragung und entweder Versendung des Abfrageergebnisses per SMS an den Nutzer oder Einbringung der Abfrageergebnisse in den allgemeinen Inhalt) gehandhabt.
Alternativ kann diese Abfrage auch über eine direkte bi-direktionale Kommunikation zwischen Content-Sender und mobilem Endgerät erfolgen. Dies erfordert aufgrund der limitierten Sendeleistung und somit Reichweite des stationären Gerätes bei diesen Aufgaben eine geringe Entfernung zu einem Hot-Spot (Stationärer Content-Sender mit Sende-Empfangsfunktionalität).
Die Beschränkung der Daten auf die lokal relevanten Daten wird über Verwendung einer Funktechnik, bevorzugt mit einer kurzen Reichweite (wenige Meter bis wenige hundert Meter) sowie über die Wahl der Platzierung des Senders erreicht. Der Inhalt kann somit lokal für den Abdeckungsbereich des Senders auf die relevanten Anforderungen spezifisch angepasst werden. Durch die Anpassung der Reichweite des Senders über die Sendeleistung kann der Abdeckungsbereich auf die jeweiligen Anforderungen angepasst werden. Content-Sharing und Zugriff auf die gleichen Informationsdatenbanken sind für die einzelnen Sender fallweise möglich. Gegenstand der Erfindung ist auch ein Datenübertragungssystem bestehend aus mindestens einem Funk-Endgerät als Empfangs-, evtl. auch als Sende-Empfangseinheit und mindestens einem stationären oder mobilen Content-Sender, evtl. auch als Sende-Empfangseinheit, wobei der Content-Sender im wesentlichen zur uni-direktionalen Datenübertragung auf das Funk-Endgerät eingerichtet ist. Das Funk-Endgerät ist hauptsächlich für den Empfang der Daten vom Content-Sender angelegt. Es kann aber auch für die bi-direktionale Kommunikation (zusätzlich das Senden von Daten an den Content-Sender) ausgelegt sein. In diesem Fall nimmt der Content-Sender auch die Aufgabe des Empfangs der gesendeten Daten des Funk-Endgeräts wahr.

### Vorteile

Aufgrund der Uni-Direktionalität der Übertragung ist eine angemessene Sendereichweite und somit eine Unabhängigkeit von Hot-Spots (mit einem kleinen Abdeckungsradius) möglich. Die Lösung lässt sich, mit geringen Einschränkungen, somit auch in hohen Räumen oder für freie Flächen realisieren.
Der Stromverbrauch der Funk-Endgeräte ist insbesondere bei ausschließlicher Nutzung der Funktion Empfänger gemäß der bevorzugten Ausführung gering.
Wegen der größeren Reichweite ist eine lückenlose Abdeckung einer definierten Fläche mit geringen Investitionen in das Sendemetzwerk möglich. Da die Daten im wesentlichen nur uni-direktional übertragen werden, können die Daten ohne Kapazitätsengpässe bei der Sendeeinheit an beliebig viele Empfänger übertragen werden. Aufgrund einer in wesentlichen Punkten ähnlichen Infrastruktur ist sowohl bei den Funk-Empfängern, wie auch den Content-Sendern eine Kombination mit Mobiltelefonie- oder auch Hot-Spot-basierenden Technologien und somit die Nutzung gemeinsamer Ressourcen möglich.
Insbesondere bei Verwendung bestehender Ressourcen (bevorzugt JAVA-fähige Mobiltelefone) sind die Investitionen in das Funk-Endgerät, bzw. die Erweiterung sehr gering.
Der Inhalt ist allgemein zugänglich und wird den Nutzern kostenlos zur Verfügung gestellt. Für den Content-Anbieter entstehen im wesentlichen nur laufende Kosten für die Contentpflege und geringe Kosten für den Betrieb der (wenigen) Sender in einem weitmaschigen Netzwerk.
Geringe Investitionen und Kosten für Content-Anbieter und Nutzer schaffen die Voraussetzung für eine schnelle Marktdurchdringung.
Aufgrund der Uni-Direktionalität ist eine hohe Datensicherheit (falls die stationären Sender in ein Netzwerk eingebunden sind erfolgt die Datenübertragung in der bevorzugten Ausführung ebenso uni-direktional auf den Sender) und eine geringe Störanfälligkeit gewährleistet.
Mittels Identifikationskennung können Daten von unterschiedlichen Quellen getrennt behandelt und durch den Nutzer ausgewählt werden.
Über die Seitenstruktur ist ein bedienungsfreundlicher und (bei Übertragung des Inhalts in Zyklen mit geringen Abständen) schneller Zugriff auf die Daten möglich. Über eine Anpassung des Inhalts an den jeweiligen Ort des Senders und die mit der Sendereichweite abgedeckte Fläche lassen sich die Daten des einzelnen Senders optimal lokal vorselektieren. Über die Anpassung der Sendereichweite des Content-Senders lässt sich die abgedeckte Fläche ideal an die Anforderungen anpassen.
Die Informationen erreichen die Nutzer ohne große Streuverluste, da die zur Verfügung gestellten Informationen lokal und zeitlich auf den Bedarf abgestimmt werden können (Beispielhaft wäre hier der Lageplan des aktuellen Stockwerks einer speziellen Filiale einer bestimmten Kaufhauskette, in dem sich der Nutzer zu diesem Zeitpunkt befindet mit Einzeichnung der angebundenen S-Bahnlinie und die nächsten dort eintreffenden Züge genannt).
Komplexe Abfragen lassen sich in einer getrennten Systematik, z.B. mittels vorgeblendeter Masken für eine SMS-Abfrage trotz Uni-Direktionalität komfortabel und unabhängig von Hot-Spots realisieren. Alternativ ist dies auch über bi-direktionale Kommunikation in Hot-Spots möglich.
Das Verfahren ist aufgrund der eigenen mobilitätsfähigen Infrastruktur mit einer ausreichenden Reichweite insbesondere für den kostengünstigen Einsatz in mobilen Verkehrsmitteln geeignet.

Weitere Vorteile und Einzelheiten der Erfindung werden aus der Beschreibung der beigefügten Zeichnungen ersichtlich.
Es zeigen:
Figur 1 und 2 eine Ausführungsform eines erfindungsgemäßen Datenübertragungssystems
Figur 3 bis 5 eine Illustration der Vorteile des Verfahrens im Vergleich zu anderen Verfahren mit eigener Infrastruktur
Figur 6 eine Illustration des Verfahrens am Beispiel des Einsatzes in einem Bahnhof
Figur 7 eine Illustration der besonderen Eignung des Verfahrens in mobilen Verkehrsmitteln am Beispiel eines fahrenden Zugs
Figur 8 ein Flussdiagramm zur Illustration einer Ausführungsform der erfindungsgemäßen Struktur der Daten des Datenübertragungsverfahrens.

### Erläuterung einer Ausführungsform

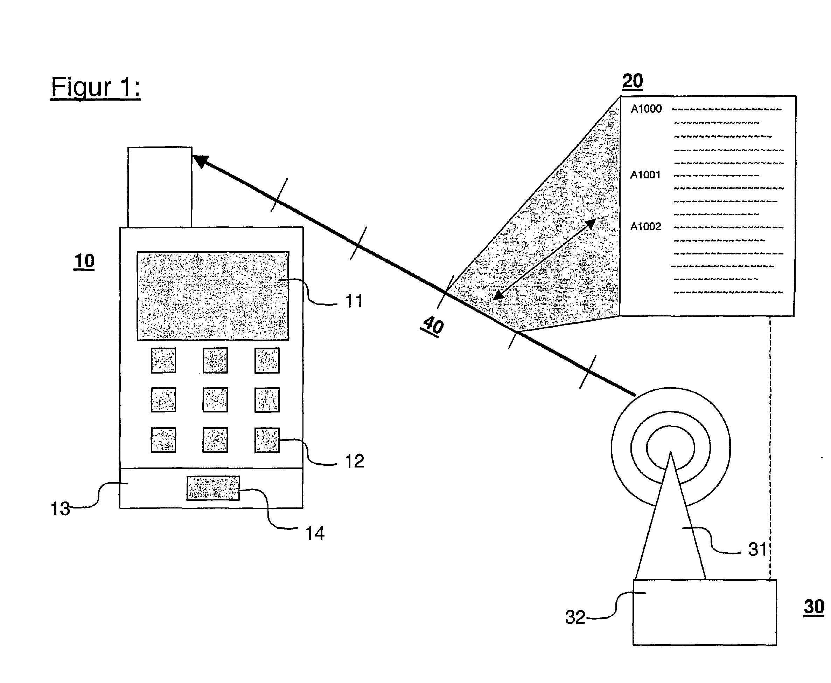

Figur 1 zeigt schematisch ein erfindungsgemäßes Datenübertragungssystem, das vorzugsweise ein Informationssystem für lokal relevante Daten ist. Das Datenübertragungssystem umfasst mindestens ein Funk-Endgerät (10), einen strukturierten Inhalt (20) und mindestens einen Content-Sender (30), wobei das Funk-Endgerät (10) auf den Empfang der gesendeten Daten (20) des Content-Senders (30) eingerichtet ist.
Das Funk-Endgerät (10) ist vorzugsweise ein Mobiltelefon mit einer Anzeige (11), Bedienelementen (12) und eventuell einer Empfänger-Erweiterung (13). Das Funk-Endgerät (10) ermöglicht dem Nutzer die Daten (20) des Content-Senders zu empfangen, mittels Eingabe der Seitennummern über die Bedienelemente (12) die gewünschten Seiten des Inhalts (20) auszuwählen und auf der Anzeige (11) darstellen zu lassen.
Wird als Funk-Endgerät (10) ein Mobiltelefon oder PDA verwendet, so ist dieses oder eine externe Erweiterung (13) vorzugsweise mit einer Starttaste (14) zur Auslösung des Datenübertragungsverfahrens ausgestattet. Es ist eine gesonderte Starttaste (14) vorgesehen oder eine standardmäßig vorhandene Taste der Bedienelemente ist so konfiguriert, daß z.B. bei Doppel- oder längerer ununterbrochener Betätigung das erfindungsgemäße Datenübertragungsverfahren begonnen wird.
Der Inhalt (20) wird vom Content-Sender (30) in der bevorzugten Ausführung mittels Funk mit einer Reichweite (40) von wenigen Metern bis zu einigen Kilometern, bevorzugterweise wenigen hundert Metern, unabhängig von einem
Funknetzbetreiber und damit weitestgehend kostenlos gesendet. Der Inhalt (20) wird in der bevorzugten Ausführung wiederkehrend unter Berücksichtigung inzwischen erfolgter Änderungen gesendet.
Der Inhalt (20) besitzt in der bevorzugten Ausführung eine (z.B. durch vierstellige Zahlen) gegliederte Seitenstruktur, mit jeweils zugeordneten definierten Inhalten. Diese Inhalte können jede Art von Daten enthalten, bevorzugt lokal situationsbezogene Daten, bedingt durch die jeweilige Position des Content-Senders (30).

Der Content-Sender (30) ist bevorzugterweise eine Sender-Einheit mit einer Antenne (31), die zur Übertragung des Inhalts (20) mittels Funk an das Funk-Endgerät (10) ausgelegt ist. Der Content-Sender enthält auch eine Steuereinheit (32), die einen Speicher des Inhalts (20), einen Zeitgeber, um den zu sendenden Teil des Inhalts (20) an die zeitlich relevanten Anforderungen anzupassen, und eventuell eine Schnittstelle zu Netzwerken, externen Datenbanken, Eingabegeräten, Empfängern (Funk, Schall, Licht), Leitständen, Positionsmessgeräten, Kompass und anderen physikalischen Messgeräten bildet.

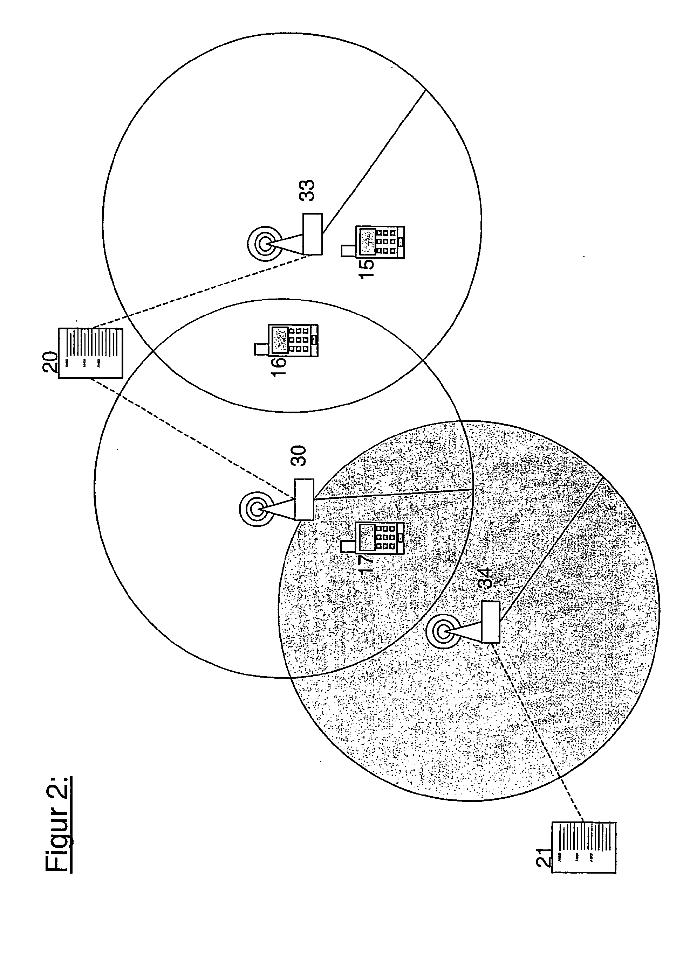

Wie in Figur 2 dargestellt, ermöglicht das erfindungsgemäße
Datenübertragungsverfahren, daß die Inhalte (20) und (21) von einer Vielzahl von Nutzern zur Befriedigung des lokalen Informationsbedarfs parallel empfangen werden können, die sämtlich mit einem Funk-Endgerät (15), (16), (17) ausgestattet sind.
Da die Daten uni-direktional gesendet werden, erfolgt dies, ohne daß die jeweiligen Zugriffszeiten aufgrund des mehrfachen Zugriffs länger werden, oder daß die Geräte sich dabei gegenseitig stören.
Content-Sender (30) und (33) mit dem gleichen Inhalt (20) können sich in dem erfindungsgemäße Datenübertragungsverfahren überschneiden. Ebenso Content-Sender (30) und (34) mit unterschiedlichen Inhalten (20) und (21). Die Content-Sender (30), (33) und (34) können zum Versenden von Inhalts- bzw. Sender-Identifikationsdaten ausgelegt sein, um einen Zugriff auf die relevanten Inhalte des ausgewählten Senders bzw. Anbieters eindeutig zu gewährleisten.

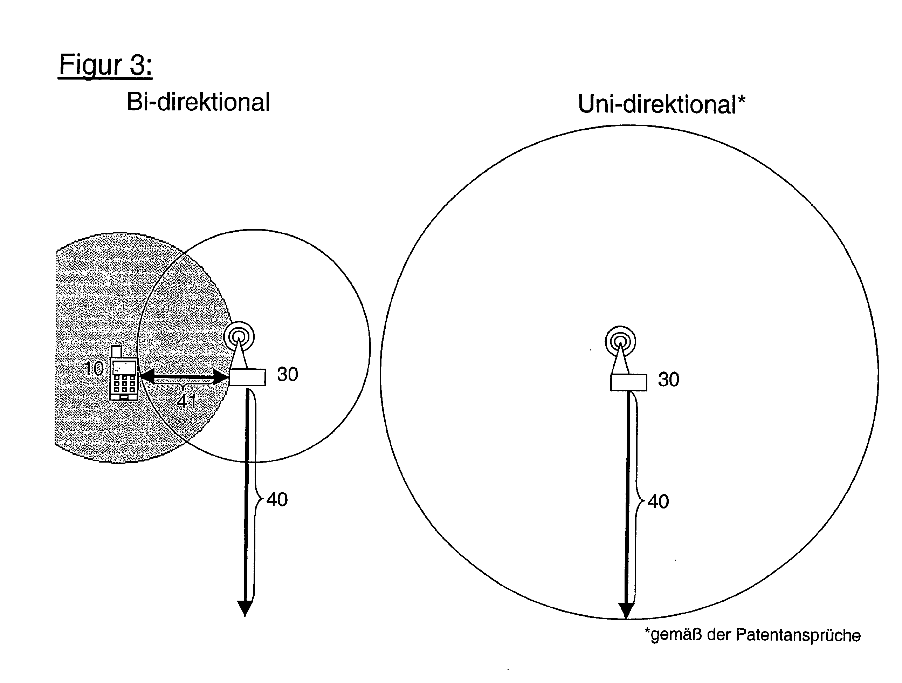

Figur 3 illustriert Vorteile der Erfindung: Der stationäre Content-Sender (30) hat eine Reichweite von (40). Das Funk-Endgerät (10) ist der Engpass. Es besitzt bei bi-direktionaler Kommunikation eine Reichweite von (41) und legt damit den Aktionsradius (41) der Lösung fest. Bei der erfindungsgemäßen uni-direktionalen Kommunikation dient das Funk-Endgerät im wesentlichen nur als Empfänger und stellt in diesem Fall keine Einschränkung dar. Der Aktionsradius entspricht der Reichweite des Content-Senders (40).

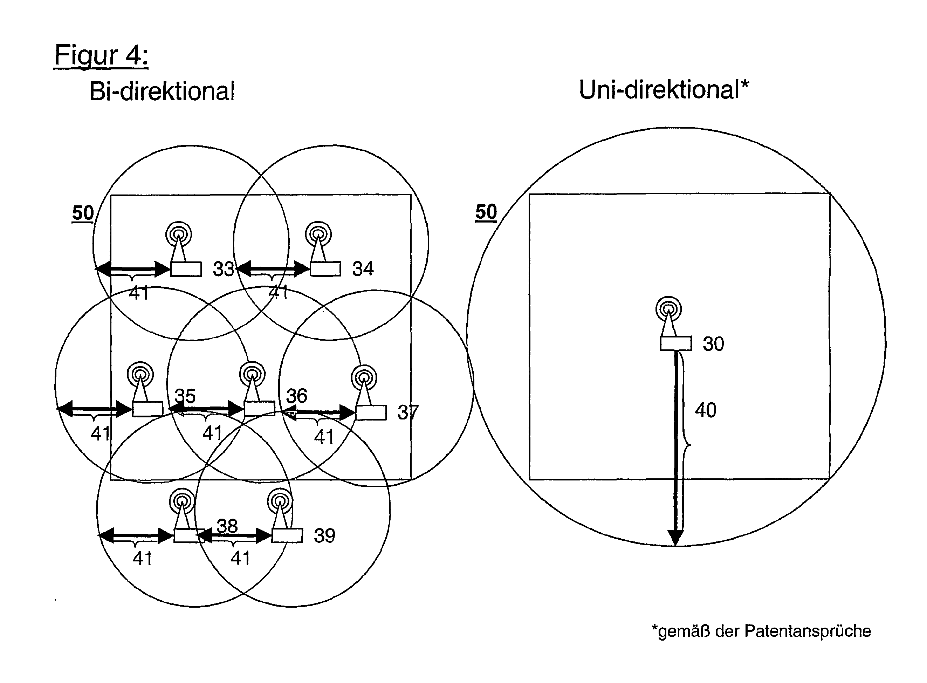

Figur 4 zeigt die Vorteile des erfindungsgemäßen Verfahrens zu anderen Verfahren mit eigener Infrastruktur am Beispiel einer Fläche (50) mit definierten Abmessungen auf. Um diese Fläche lückenlos abzudecken benötigt es bei bi-direktionaler Kommunikation und Funk-Endgeräten mit einem Aktionsradius von (41) sieben Content-Sender (33) bis (39). Bei uni-direktionaler Kommunikation wird hingegen nur ein Content-Sender (30) mit einem Aktionsradius von (40) benötigt. Dies bedeutet einen wesentlich geringeren Investitionsaufwand.

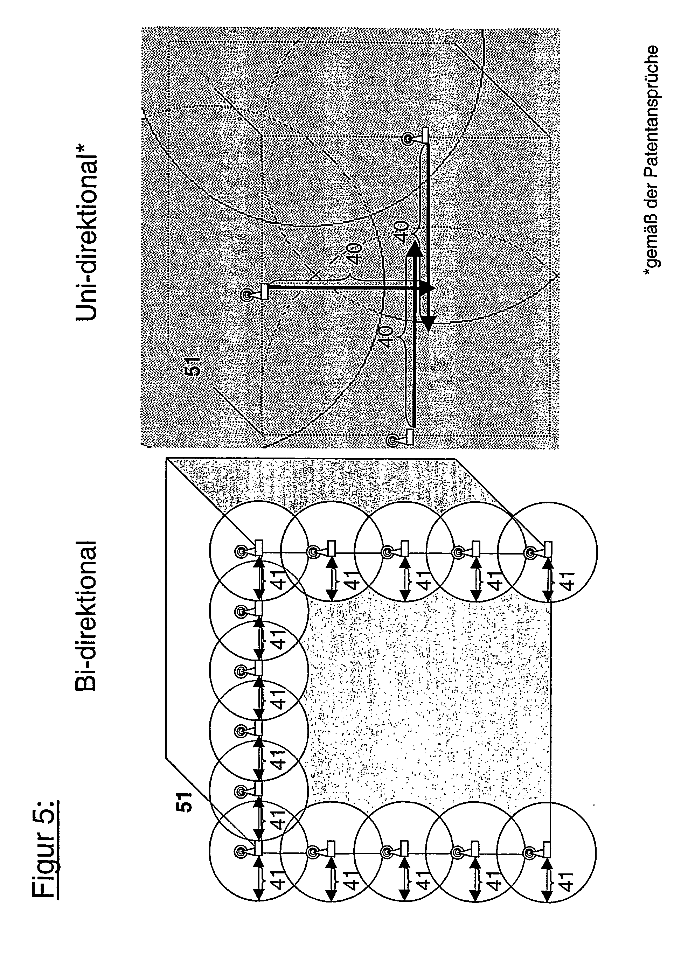

Figur 5 zeigt die Vorteile des erfindungsgemäßen Verfahrens im dreidimensionalen Raum am Beispiel des Raums (51) mit definierten Abmessungen auf.
Bei einem bi-direktionalem Verfahren und Funk-Endgeräten mit einem Aktionsradius von (41) und limitiert vorhandenen Verankerungspunkten wie Pfeilern und Decke für die Sender kann selbst bei einer großen Anzahl an stationären Content-Sendern keine ausreichende Abdeckung gewährleistet werden.
Bei einer uni-direktionalen Datenübertragung und Content-Sendern mit einem Aktionsradius von (40) ist dies in weitaus umfassenderer Art und Weise möglich.

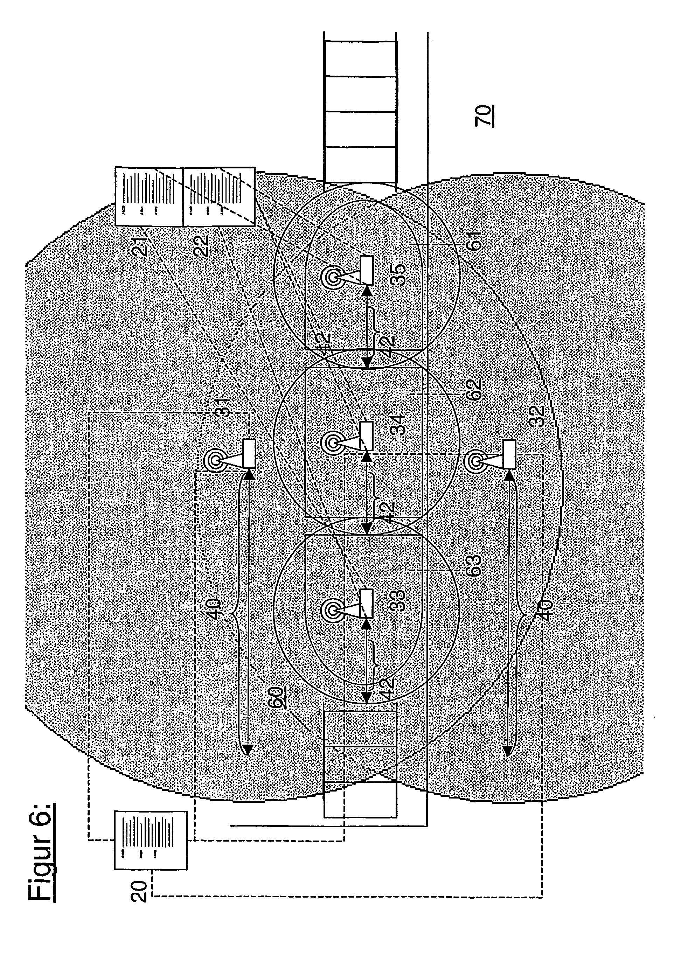

In Figur 6 wird die Anwendung des Verfahrens am Beispiel in einem Bahnhof beschrieben. Ein Zug (60) befindet sich am Bahnsteig in einem Bahnhof. In den 3 Wagen des Zuges (61) bis (63) ist jeweils ein Content-Sender (33) bis (35) mit der Reichweite (42) angebracht. Befindet sich der Nutzer im ersten Wagen (61), so erhält er neben den relevanten Inhalten (22) zu diesem Wagen (z.B. nicht reservierte Plätze, Lage des Speisewagens) auch für den gesamten Zug (60) relevante Inhalte (21) (z.B. Fahrtzeiten, Stationen, Radioprogramm). Die Sendeleistung und daraus folgernd die Reichweite (42) ist so abgestimmt, daß die Informationen die Fläche in und vor dem Zug abdecken und somit genau die Nutzer erreicht, für die diese Informationen relevant sind. Ebenfalls kann der Nutzer auf die Bahnhofsinformationen (Inhalte (20)) der zwei Sender (31) und (32) mit identischem Sendeinhalt und der Reichweite (40) zugreifen. Hier werden auf den Bahnhof bezogene Informationen zur Verfügung gestellt (z.B. Gleisplan, Abfahrtsplan, Verspätungen).

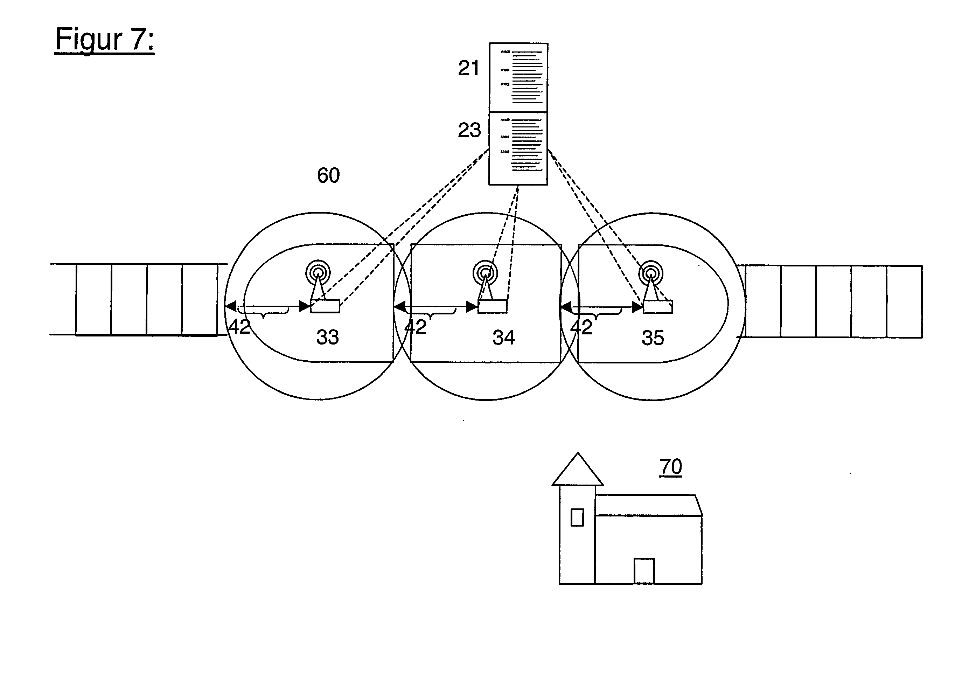

In Figur 7 wird die Anwendung des Verfahrens in mobilen Verkehrsmitteln am Beispiel eines Zugs erläutert. Der Zug (60) ist mit einem GPS-System ausgestattet, das seine aktuelle Position ermittelt. Daneben hat es einen Computer an Bord und wird über eine elektronische Verbindung (z.B. Bahnfunk) zur nächsten Steuerzentrale immer auf dem aktuellsten Stand der weiteren Information gehalten. Die Sender (33) bis (35) mit einer Reichweite von jeweils (42) übermitteln die lokal relevanten Informationen an die Nutzer. Neben auf den Zug fixierten (evtl. zeitabhängige) Inhalte (21) (wie z.B. Zugverspätungen) werden hierbei auch lokal begrenzt relevante Informationen, z.B. über Sehenswürdigkeiten (70), die in diesem Moment passiert werden, übermittelt. Diese Informationen werden abhängig von der aktuellen Position des Zugs, ermittelt durch das GPS, auf bestimmte Seiten im Inhalt (23) platziert gesendet.

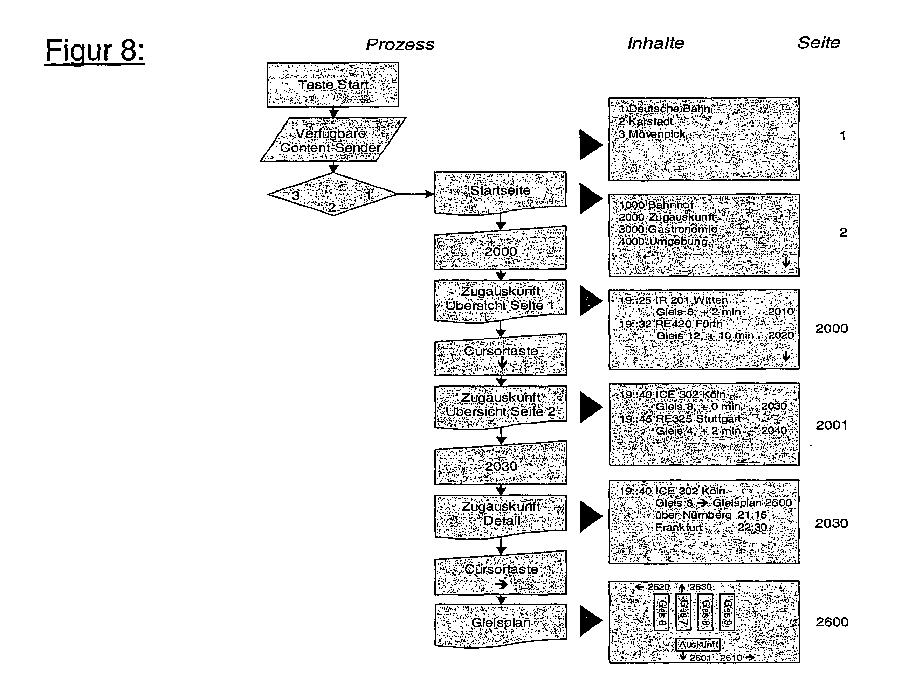

Figur 8 illustriert eine Ausführungsform der erfindungsgemäßen Struktur der Daten des Datenübertragungsverfahrens, sowie den Prozess der Selektion der relevanten Daten für de Darstellung der Inhalte am Beispiel Zugauskunft. Nach Verfahrensbeginn und Druck der Starttaste auf dem Funk-Endgerät erhält der Nutzer eine Übersicht der unterschiedlichen Content-Sender, in deren Reichweite er sich gerade befindet auf seinem Display dargestellt. Nach der Entscheidung mittels Tastendruck für einen Content-Sender werden ihm in dieser Sitzung durch das Funk-Endgerät nur die jeweiligen Inhalte dieses Senders, beginnend mit der relevanten Startseite gefiltert zur Verfügung gestellt. Der Nutzer gibt über die Nummerntastatur des Funk-Endgeräts die Seitenzahl 2000 ein. Der Content-Sender sendet währenddessen kontinuierlich den gesamten Inhalt. Sobald die gewählte Seite wieder gesendet und durch das Funk-Endgerät empfangen wurde, zeigt das Funk-Endgerät den Inhalt der Seite 2000, die erste Seite der Zugauskunft, in der Übersichtsdarstellung an. Das Funk-Endgerät speichert jeweils die folgenden 10 Seiten des Inhalts, sowie die Seiten des Inhalts auf die Verknüpfungen führen. Über den Druck der Funktionstaste "Pfeil nach unten" ruft das Gerät den gespeicherten Inhalt der Seite 2001, die zweite Seite der Zugauskunft in der Übersichtsdarstellung, auf und stellt ihn auf dem Display dar. Nachdem der Nutzer die Seitennummer 2030 eingegeben hat, wartet das Funk-Endgerät, daß diese Seite das nächste Mal vom Content-Sender gesendet wird. Sobald dies erfolgt ist, wird die Seite, die Zugauskunft im Detail, dargestellt.
Mit Druck auf Funktionstaste "Pfeil nach rechts" wird die wiederum gespeicherte Seite 2600, der Gleisplan, aufgerufen und im Display angezeigt.

Das erfindungsgemäße Datenübertragungssystem kann wie folgt modifiziert werden. Es kann vorgesehen sein, daß als Funk-Endgeräte nicht Mobiltelefone sondern andere tragbare Empfangs-Einheiten, z.B. entsprechend ausgestattete tragbare Rechner oder sogenannte PDAs oder eigenständige Geräte verwendet werden. Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Datenübertragung von lokal relevanten Inhalten zwischen mindestens einem Funk-Endgerät (10) und mindestens einem Content-Sender (30), wobei das Verfahren folgende Schritte enthält:
Wiederkehrende uni-direktionale Sendung eines Teils oder des gesamten Inhalts (20) in Form einer Seitenstruktur durch den Content-Sender;
Identifikation vorhandener Content-Sender (30), (34) und daraus Auswahl eines gewünschten Senders (30) über das Funk-Endgerät (17);
Empfang des Inhalts durch das Funk-Endgerät (17);
Auswahl und Darstellung von Teilen des Inhalts (20) in Form von Seiten durch das Funk-Endgerät (17);
Durchführung von Abfragen deren Ergebnisse in dieser Form nicht durch den Inhalt abgedeckt sind mittels vorgegebener Masken, wobei das Verfahren **dadurch gekennzeichnet, daß** bei der Durchführung dieser Abfragen sowohl die Versendung der Abfrage vom Funk-Endgerät an den Content-Anbieter als auch die Übermittlung des Ergebnisses der Abfrage vom Content-Sender an das Funk-Endgerät mittels SMS erfolgt, oder alternativ, bei Verfügbarkeit eines Hot-Spots in Sendereichweite, mittels bi-direktionaler Datenübertragung, wobei, alternativ zur Übermitttlung des Ergebnissses der Abfrage vom Content-Sender an das Funk-Endgerät mittels SMS, die Übermittlung durch Einbringung der Ergebnisse in den Inhalt erfolgen kann.

2. Verfahren gemäß Anspruch 1, bei dem das Funk-Endgerät (10) durch ein Mobiltelefon, ein PDA oder einen tragbaren Rechner, jeweils mit Funkempfänger oder durch eine Kombination der genannten Geräte dargestellt wird.

3. Verfahren gemäß einem der vorhergehenden Ansprüche, bei dem an den Content-Sender (30) eine oder mehrere Netzwerke, externe Datenbanken, Eingabegeräte, Empfänger, Leitstände, Positionsmessgeräte, Kompass und andere physikalische Messgeräte angeschlossen ist, mit denen Informationen an den Content-Sender übertragen werden.

4. Verfahren, gemäß einem der vorhergehenden Ansprüche, bei dem mehrere Funk-Endgeräte (16), (17) simultan auf Daten eines Content-Senders (30) zugreifen.

5. Verfahren gemäß einem der vorhergehenden Ansprüchen, bei dem mehrere Content-Sender (30), (34) vorgesehen sind, die jeweils einzelnen eventuell unterschiedlichen Content-Anbietern zugehörig sind und zumindest teilweise unterschiedliche Inhalte (20), (21) senden.

6. Verfahren gemäß einem der vorhergehenden Ansprüche, bei dem der Content-Sender (30) stationär ist.

7. Verfahren gemäß einem der vorhergehenden Ansprüche, bei dem der Content-Sender (30) mobil angebracht ist.

8. Verfahren gemäß einem der vorhergehenden Ansprüche, bei dem der Content-Sender (30) in einem Verkehrsmittel angebracht ist.

9. Verfahren gemäß einem der vorhergehenden Ansprüche, bei dem die gezielte Fokussierung auf die relevanten Daten durch die planmäßige Anpassung der Sendereichweite unterstützt wird.

10. Verfahren gemäß Anspruch 1, bei dem der Inhalt (20) mit Inhalts-, bzw. Senderidentifikationskennung versehen ist und die Inhalte (20) in einer definierten Seitenstruktur mit einer Gliederung oder Index gestaltet sind, anhand derer die Inhalte in Seitenstruktur ausgewählt und dargestellt werden.

11. Datenübertragungssystem, das mindestens ein Funk-Endgerät (10) sowie mindestens einen Content-Sender (30) umfasst und **dadurch gekennzeichnet ist, daß** es zur Durchführung aller Schritte eines Verfahrens gemäß mindestens einem der Ansprüche 1 bis 10 ausgerichtet ist.

12. Datenübertragungssystem, gemäß Anspruch 11, bei dem die Datenübertragung mittels Funk, Schall oder Licht erfolgt.

13. Datenübertragungssystem gemäß einem der Ansprüche 11 bis 12, welches so ausgerichtet, daß die übertragenen Daten gespeichert werden und der Zugriff statt auf die aktuell übertragenen Daten auf die gespeicherten Daten erfolgt.

14. Funk-Endgerät (10) in einem Datenübertragungssystem, in dem Funk-Endgerät und Content-Sender miteinander kommunizieren, das eine Empfangseinheit bzw. Sende-Empfangseinheit (13) beinhaltet und das **dadurch gekennzeichnet ist, daß** es für die Durchführung aller Schritte des Verfahrens gemäß mindestens einem der Ansprüche 1 bis 10 ausgelegt ist.

15. Funk-Endgerät (10) gemäß Anspruch 14, das mit einer Starttaste (14) zur Auslösung des Verfahrens gemäß mindestens einer der Ansprüchen 1 bis 10 ausgestattet ist.

16. Funk-Endgerät (10) gemäß Anspruch 14, bei dem das Funk-Endgerät (10) mit Funktionstasten (12) zum Aufrufen definierter anderer Seiten ausgestattet ist.

17. Funk-Endgerät (10) gemäß Anspruch 14, bei dem das Funk-Endgerät (10) mit einem Speicher für einen Teil des Inhalts (20) oder den gesamten Inhalt (20) ausgestattet ist.

18. Content-Sender (30) in einem Datenübertragungssystem, in dem Funk-Endgerät und Content-Sender miteinander kommunizieren, der eine Sendeeinheit bzw. Sende-Empfangseinheit beinhaltet und der **dadurch gekennzeichnet ist, daß** er für die Durchführung aller Schritte des Verfahrens gemäß mindestens einem der Ansprüche 1 bis 10 ausgelegt ist.

## Claims

1. Mode for data transfer of contents between at least one radio end device (10) and at least a content transmitter (30) in which the mode contains the steps as follows: Recurring transmit of parts of the content (20) or the complete content (20) in form of a page structure. Identification of available content transmitter (30), (34) and out of it selection of the desired transmitter (30) by means of the radio end device (17); Reception of the content by the radio end device (17);
Selection and display of parts of the content in the form of pages by the radio end device (17);
Execution of queries where the results aren't covered in the desired way by the content by means of predefined masks, whereas the method is **characterized by** execution of these queries, the transmission of the query of the radio end device to the content provider, as well as the transmission of the result of the query from the content transmitter to the radio end device are executed by SMS or alternatively, if a Hot Spot is available in transmission range, by bi-directional data transmission whereas alternatively to transmission of the result of the query from the content transmitter to the radio end device by SMS the transmission of the result can take place be including the results in the content.

2. Method in accordance with claim 1 at which the radio end device (10) is represented by a mobile telephone, a PDA or a portable computer, respectively equipped with radio receiver or by a combination of the mentioned equipment.

3. Method in accordance with one of the previous claims at which one or several networks, external databases, input devices, receivers, control stations, position gauges, compasses and other physical analyzers are connected to the content transmitter (30) from which information is transferred to the content transmitter

4. Method, in accordance with one of the previous claims at which several radio end devices (16), (17) access simultaneously data of a content transmitter (30).

5. Method, in accordance with one of the previous claims at which several content transmitter (30), (34) are arranged, affiliated each to a single content provider which send at least partly different contents (20), (21).

6. Method in accordance with one of the previous claims at which the content transmitter (30) is fixed.

7. Method in accordance with one of the previous claims at which the content transmitter (30) is mount mobile.

8. Method in accordance with one of the previous claims at which the content transmitter (30) is mount in a means of transportation.

9. Method in accordance with one of the previous claims at which the aimed focus on the relevant data is supported by methodic adjustment of the transmission range.

10. Method in accordance with claim 1 at which the content (20) is provided with content identification code, respectively transmitter identification code and the contents (20) are formed in defined page structure with organisation or index with which the contents are selected and displayed in page structure.

11. Data transmission system which is designed for the execution of all steps of a method according to claim 1 and contains at least one radio end device (10) as well as at least one content transmitter (30).

12. Data transmission system in accordance with claim 11 at which, the data transmission is carried out by means of radio, sound or light.

13. Data transmission system in accordance with claim 11 or 12, which is lined up so that the transmitted data are stored and the access is carried out instead of to the data transmitted currently to the stored data.

14. Radio end device (10) within a data transmission system in which the radio end device and the content transmitter are communicating with each other, which contains a receiver unit respectively transceiver unit (13) and which is **characterized by** a design for the execution of all steps of the method according to at least one of the claims 1 to 10.

15. Radio end device (10) in accordance with claim 14 which is equipped with a start button (14) to the triggering of the method according to at least one of the claims 1 to 10.

16. Radio end device (10) in accordance with claim 14 at which the radio end device (10) is equipped with function keys (12) for activation of defined other pages.

17. Radio end device (10) in accordance with claim 14 at which the radio end device (10) is equipped with a storage for a part of the content (20) or the complete content (20).

18. Content transmitter (30) within a data transmission system in which the radio end device and the content transmitter are communicating with each other, which contains a transmitter unit or transceiver unit and which is designed for the execution of all steps of the method according to at least one of the claims 1 to 10.

## Revendications

1. Procédure de transmission de données au contenu pertinent localement entre au moins un terminal de radio de type(10) et au moins un dispositif de type (30), auquel cas la procédure contient les étapes suivantes :
Envoi unidirectionnel périodique d'une partie ou du contenu total de type (20) sous la forme d'une structure paginaire;
Identification des émetteurs disponibles de type (30), (34) et de choix de l'émetteur souhaité de type (30) via le terminal de radio de type(17) ;
Accueil du contenu par le terminal de radio (17) ;
Choix et représentation des parties au contenu de type (20) de façon latérale par le terminal de radio (17) ;
La réalisation des requêtes que les résultats obtenus n'ont pas satisfaites au moyen de masques allégués, alors que la méthode est **caractérisé par** cette réalisation, la transmission des requêtes du terminal radio au soumissionnaire d'information tout autant que la transmission du résultat de cette requête de l'émetteur au terminal de radio qui est réalisée par SMS ou par Hot Spot si il est disponible, par un système de transmission de données bidirectionnel et en alternative la transmission du résultat de la requête de l'émetteur au terminal radio par SMS ; la transmission du résultat peut être réalisée en incluant le résultat dans le contenu.

2. Procédure conforme à la contrainte 1, avec laquelle le terminal de radio (10) est représenté respectivement soit par un téléphone mobile, un PDA ou un ordinateur portatif, avec des récepteurs de radio ou par une combinaison des appareils cités.

3. Procédure conforme à une des contraintes précédentes, avec laquelle au dispositif (30) est attaché un ou plusieurs réseaux, bases de données externes, organes d'entrée, récepteurs, postes de contrôle, instruments de mesure de position, compas et autres instruments de mesure physiques, avec lesquels des informations sont alors transférées.

4. Procédure, conforme à une des contraintes précédentes, avec laquelle plusieurs terminaux de radio (16) interrogent simultanément, (17) les données d'un émetteur de teneur (30).

5. Procédure conforme à une des contraintes précédentes, avec laquelle plusieurs dispositifs de type(30) et (34) sont prévus et affectés chacun à un soumissionnaire d'information qui envoie des parties des différents contenus de type (20) et (21).

6. procédure conforme à une des contraintes précédentes, avec laquelle le dispositif de type (30) est statique.

7. Procédure conforme à une des contraintes précédentes, avec laquelle le dispositif de type (30) qui est mobile paraît opportun.

8. Procédure conforme à une des contraintes précédentes, avec laquelle le dispositif de type (30) dans un moyen de transport est opportun.

9. Procédure conforme à une des contraintes précédentes, avec laquelle la focalisation ponctuelle sur les données pertinentes est accompagnée de l'adaptation de la largeur du calibrage d'émetteur conforme au plan.

10. Procédure conforme à la contrainte 1, avec laquelle le contenu de type(20) est fourni avec un code d'identification de contenu et un code d'identification de transmission. Le contenu de type (20) est donné avec une structure de page définie avec une organisation ou un index, les contenus sont sélectionnés et affichés avec une structure paginaire.

11. Système de transmission de données comprenant au moins un terminal de radio de type (10) ainsi qu'un dispositif de type (30) et **caractérisé par le fait que** tout est aligné de 1 à 10 pour garantir la réalisation en étapes de la mise en oeuvre d'une procédure conforme à au moins une de ces contraintes.

12. Système de transmission de données, conforme à la contrainte 11, avec lequel la transmission de données au moyen d'une radio, le son ou la lumière est possible.

13. Système de transmission de données conforme à une des contraintes 11 à 12, dans le cas ou il est aligné de sorte à ce que les données transférées soient stockées et que l'accès à l'emplacement des données transférées soit réalisable.

14. Terminal de radio (10) dans un système de transmission de données, dans lequel le terminal de radio n'est qu'une unité d'accueil et/ou une unité d'accueil d'envoi (13) et qui est **caractérisé par** une réalisation de toutes les étapes configurée selon une méthode satisfaisant au moins une des contraintes 1 à 10.

15. Terminal de radio (10) conforme à la contrainte 14 qui est équipé avec une touche de lancement (14) pour déclencher la procédure conformément à au moins une des contraintes 1 à 10.

16. Terminal de radio de type(10) conforme à la contrainte 14, avec lequel le terminal de radio (10) est équipé avec des touches de fonction de type(12) pour activer les autres pages définies.

17. Terminal de radio (10) conforme à la contrainte 14, avec lequel le terminal de radio (10) est équipé d'une mémoire portant sur une partie du contenu (20) ou le contenu total (20).

18. L'émetteur de type (30) dans un système de transmission de données dans lequel le terminal de radio et l'émetteur sont reliés et qui comporte une unité de transmission et qui est configurée pour la réalisation de toutes les étapes de la méthode satisfaisant au moins une des contraintes citées de 1 à 10.
